# EUROPÄISCHE PATENTSCHRIFT

(11) **EP 0 311 864 B1**
(45) Veröffentlichungstag und Bekanntmachung des Hinweises auf die Patenterteilung: **27.04.1994**
(21) Anmeldenummer: 88116324.0
(22) Anmeldetag: 03.10.1988
(51) Int. Cl.: B23Q 1/26, F16B 5/02, F16C 29/00

(54) **Werkzeugmaschine**
Machine-tool
Machine-outil

(30) Priorität: 14.10.1987 DE 3734720
(43) Veröffentlichungstag der Anmeldung: 19.04.1989
(73) Patentinhaber: Chiron-Werke GmbH & Co. KG, 78532 Tuttlingen (DE)
(72) Erfinder: Winkler, Hans-Henning, Dr., D-7200 Tuttlingen (DE); Rütschle, Eugen, D-7202 Mühlheim (DE)
(74) Vertreter: Witte, Alexander, Dr.-Ing.

(56) Entgegenhaltungen:
- DE-A- 3 716 057
- GB-A- 1 036 903
- JP-A- 5 761 437
- US-A- 3 129 538
- US-A- 3 498 685
- US-A- 3 828 515

## Beschreibung

Die Erfindung betrifft eine Werkzeugmaschine mit zwei entlang einer Achse relativ zueinander verfahrbaren Bewegungseinheiten, insbesondere einem Spindelstock und einem Maschinenbett, mit einer an der ersten Bewegungseinheit lösbar befestigten Führungsschiene zum Führen der verfahrbaren zweiten Bewegungseinheit, wobei die Führungsschiene über eine erste Oberfläche an einer zweiten Oberfläche der ersten Bewegungseinheit anliegt und mit dieser verschraubt ist und die Oberflächen eben sowie feinbearbeitet sind.

Eine Werkzeugmaschine der vorstehend genannten Art ist durch ein Erzeugnis der Anmelderin mit der Typenbezeichnung FZ 16 bekannt geworden.

Bei Werkzeugmaschinen ist es bekannt, ein Werkstück und ein Werkzeug relativ zueinander zu bewegen, um Bearbeitungsvorgänge am Werkstück ausführen zu können. Bei den meisten Werkzeugmaschinen wird diese Bewegung entlang von kartesischen Koordinaten ausgeführt, indem beispielsweise das Werkstück auf einem Werkstücktisch aufgespannt ist und entweder der Werkstücktisch oder der Spindelstock mit der Spindel oder beide entlang von Linearachsen bewegbar sind. Die Achse der Spindel kann dabei vertikal oder horizontal verlaufen.

Zur technischen Realisierung der Linearbewegung wird bei der bekannten Maschine der Spindelstock auf zwei Führungsschienen geführt, die mit dem ortsfesten Maschinenbett der Werkzeugmaschine verschraubt sind, wobei zur Bewegung des Spindelstocks beispielsweise ein Kugelspindelantrieb verwendet werden kann, um den Spindelstock auf den Führungsschienen zu verschieben.

Bei der bekannten Werkzeugmaschine werden Führungsschienen mit Längskugellager-Führungen eingesetzt, wie sie als fertige Bauteile im Handel erhältlich sind. Die im Handel erhältlichen Führungsschienen sind an ihren Oberflächen allseits feinbearbeitet, nämlich üblicherweise geschliffen. Die Oberfläche des Maschinenbetts an der Stelle, an der die Führungsschiene aufgeschraubt wird, ist ebenfalls feinbearbeitet, nämlich ebenfalls geschliffen, damit durch Anlage der geschliffenen Oberflächen von Führungsschiene und Maschinenbett eine präzise Ausrichtung der Führungsschienen, insbesondere eine achsparallele Ausrichtung der beiden Führungsschienen, erreicht wird.

Es hat sich jedoch herausgestellt, daß diese Konfiguration in der Praxis Nachteile aufweisen kann.

Wird nämlich eine Werkzeugmaschine der eingangs genannten Art falsch eingestellt, kann es geschehen, daß der Spindelstock mit eingespanntem Werkzeug bei voller Vorschubgeschwindigkeit gegen ein auf dem Werkstücktisch aufgespanntes Werkzeug fährt. Bei diesem unbeabsichtigten Zusammenstoß von Werkzeug und Werkstück werden extrem große Kräfte ausgeübt, die auch in der Anlagefläche zwischen Führungsschienen und Maschinenbett wirksam werden. Diese beim Zusammenprall wirksam werdenden Kraftspitzen können zur Folge haben, daß die Führungsschienen an den aufeinanderliegenden geschliffenen Oberflächen von Führungsschienen und Maschinenbett geringfügig verrutschen, was wiederum zur Folge hat, daß die Werkzeugmaschine demontiert und neu justiert werden muß.

Aus dem Dokument JP-A-57-61437 ist eine Führung für eine Werkzeugmaschine bekannt. Die Führung besteht aus einem Maschinenbett, an das einstückig nach oben abstehende Führungsleisten angeformt sind. Am oberen Ende laufen die Führungsleisten in einen im Radialschnitt L-förmigen Abschnitt aus, wobei sich bei paarweise parallel verlaufenden Führungsleisten die vertikalen Abschnitte des L-förmigen Querschnitts einander gegenüberstehen. In die Aussparungen der L-förmigen Abschnitte können keramische Führungsleisten eingeschraubt werden. Um die Parallelität zwischen den keramischen Führungsleisten und den L-förmigen Abschnitten der metallischen Führungsleisten zu gewährleisten, sind diese im Bereich der L-förmigen Abschnitte mit axial verlaufenden Rillen versehen. Diese Rillen haben zur Folge, daß im Radialschnitt eine sägezahnförmige Oberfläche mit Spitzen entsteht. Durch das Anziehen der Befestigungsschrauben der keramischen Führungsleisten werden die oberen Abschnitte der Spitzen plastisch deformiert.

Der Erfindung liegt demgegenüber die Aufgabe zugrunde, eine Werkzeugmaschine der eingangs genannten Art dahingehend weiterzubilden, daß auch bei einem unbeabsichtigten Auffahren von Bewegungseinheiten aufeinander ein Verrutschen der Führungsschienen vermieden wird.

Diese Aufgabe wird erfindungsgemäß dadurch gelöst, daß mindestens eine der aneinanderliegenden Oberflächen mindestens in einem Bereich, der dem Druckkegel von eingeschraubten Maschinenschrauben entspricht, aufgerauht ist.

Die der Erfindung zugrundeliegende Aufgabe wird auf diese Weise vollkommen gelöst, weil durch die Verwendung einer
aufgerauhten Oberfläche ein Reibbeiwert zwischen Führungsschienen und der jeweils zugehörigen Bewegungseinheit hergestellt wird, der zusammen mit den hohen axialen Anzugskräften der Maschinenschrauben in der Lage ist, auch hohe Kraftspitzen zu überdrücken, die in radialer Richtung zu den Maschinenschrauben wirksam werden. Auf diese Weise können bei einem unbeabsichtigten Aufprall von Bewegungseinheiten aufeinander die Schäden z.B. auf den Bereich des Werkzeugs und des Werkstücks beschränkt werden, ohne daß ein Nachjustieren der Werkzeugmaschine erforderlich ist.

Bei einer bevorzugten Ausgestaltung der Erfindung ist die erste obere Fläche der an ihren übrigen Oberflächen geschliffenen Führungsschiene aufgerauht.

Diese Maßnahme hat den Vorteil, daß das Aufrauhen an einem leicht handhabbaren Maschinenelement, nämlich der Führungsschiene, vorgenommen werden kann.

Bei einer weiteren bevorzugten Ausgestaltung der Erfindung ist die Oberfläche in einem Bereich aufgerauht, der dem Druckkegel von eingeschraubten Maschinenschrauben entspricht.

Diese Maßnahme hat den Vorteil, daß der Bereich der Erhöhung des Reibbeiwerts auf den geometrischen Bereich beschränkt ist, in dem die wesentlichen axialen Spannkräfte der Maschinenschrauben ausgeübt werden, während die Oberflächen im übrigen feinbearbeitet, beispielsweise geschliffen bleiben können, so daß die Ausrichtung der Führungsschienen auf der jeweiligen Bewegungseinheit erhalten bleibt.

Schließlich ist noch eine weitere Ausführungsform der Erfindung besonders bevorzugt, bei der die Oberflächen mittels Elektroerosion aufgerauht ist.

Diese Maßnahme hat den Vorteil, daß durch Einsatz der Elektroerosion eine in hohem Maße definierte und reproduzierbare Aufrauhung der Oberfläche möglich ist. Die Aufrauhung muß nämlich in einer Weise vorgenommen werden, daß die Paarung der Rauhigkeiten an der Führungsschienen und der jeweiligen Bewegungseinheit keine Abweichung der Ausrichtung der Führungsschiene von einer vorbestimmten idealen Lage mit sich bringt. Es ist daher erforderlich, die eine oder beide Oberflächen im µ-Bereich aufzurauhen, damit der durch das Aufrauhen erzielte Vorteil nicht durch Nachteile bei der Lagegenauigkeit der Führungsschienen erkauft werden muß.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: eine stirnseitige Ansicht einer Führung eines Spindelstocks einer erfindungsgemäßen Werkzeugmaschine;
- Fig. 2: eine schematisierte Ansicht der in Fig. 1 erkennbaren Führungsschiene zur Erläuterung des erfindungsgemäßen Vorgehens.

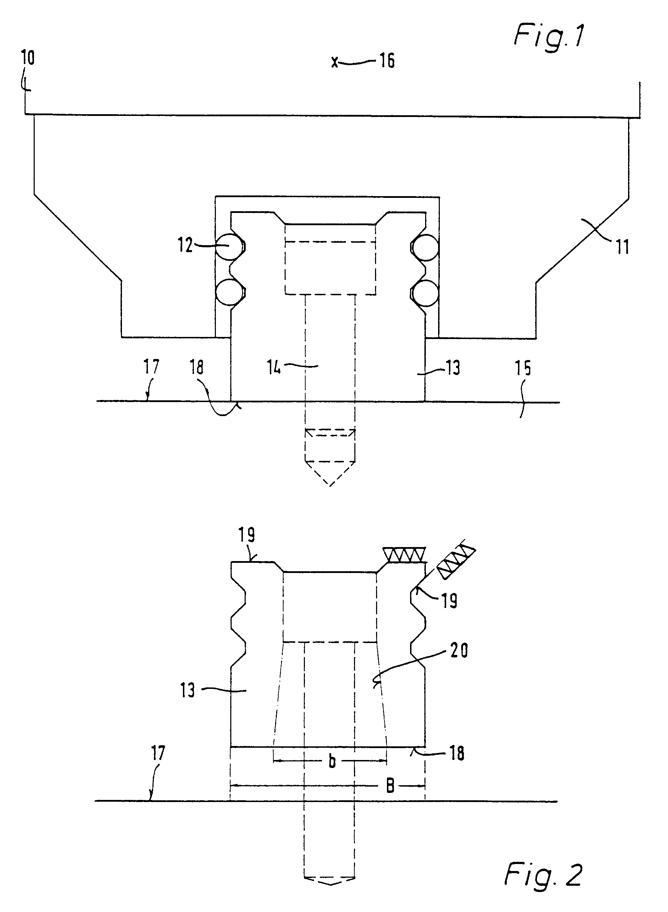

In Fig. 1 bezeichnet 10 einen Spindelstock einer Werkzeugmaschine, der an seiner Unterseite mit zwei Wagen versehen ist, von denen einer mit 11 dargestellt ist. Der Wagen 11 ist mit einer Längs-Kugellagerung 12 versehen, die in Fig. 1 ebenfalls äußerst schematisch angedeutet ist und mit einer Führungsschiene 13 zusammenwirkt, die sich senkrecht zur Zeichenebene der Fig. 1 erstreckt.

Die Führungsschiene 13 ist mit über ihre Länge verteilten Maschinenschrauben 14 an einem Maschinenbett 15 festgeschraubt, so daß insgesamt der Spindelstock 10 entlang einer Achse 16 senkrecht zur Zeichenebene der Fig. 1 verfahren werden kann.

Die Führungsschiene 13 liegt auf einer ersten Oberfläche 17 des Maschinenbetts 15 mit einer zweiten Oberfläche 18 an ihrer Unterseite auf.

Bei Verwendung einer handelsüblichen Führungsschiene 13 sind alle Oberflächen, wie sie in Fig. 2 mit 19 bezeichnet sind, feinbearbeitet, üblicherweise geschliffen.

Da auch die erste Oberfläche 17 des Maschinenbetts 15 geschliffen ist, würde bei unveränderter Verwendung einer handelsüblichen Führungsschiene 13 diese mit einer geschliffenen Oberfläche im Bereich der zweiten Oberfläche 18 auf einer ebenfalls geschliffenen ersten Oberfläche 17 des Maschinenbetts 15 aufliegen. Infolge des extrem kleinen Reibungskoeffizienten zwischen den dann aufeinanderliegenden geschliffenen Oberflächen würde selbst eine extrem hohe axiale Spannkraft der Maschinenschrauben 14 nicht ausreichen, um einen Schlag zu überwinden, der auf die Führungsschiene 13 in einer Richtung senkrecht zur Längsachse der Maschinenschrauben 14 ausgeübt wird. Ein derartiger Schlag kann dann auf die Führungsschiene 13 ausgeübt werden, wenn z.B. infolge einer fehlerhaften Programmierung seiner Bahnbewegung der Spindelstock 10 auf ein raumfestes Hindernis auffährt, beispielsweise das in eine Spindel des Spindelstocks 10 eingespannte Werkzeug auf ein Werkstück, das auf einem Werkstücktisch aufgespannt ist. Da die Maschinenschrauben 14 lediglich eine axiale Spannkraft zwischen Führungsschiene 13 und Maschinenbett 14 erzeugen, ohne die Führungsschiene 13 in radialer Richtung der Maschinenschraube 14 zu zentrieren, wird die Führungsschiene 13 bei einer derartigen schlagartigen Belastung geringfügig verrutschen, weil die Maschinenschrauben 14 in den zugehörigen Stufen-Durchgangsbohrungen der Führungsschiene 13 mit gewissem radialem Spiel gehalten sind.

Um dies zu verhindern, wird erfindungsgemäß beispielsweise die Führungsschiene 13 an ihrer zweiten Oberfläche 18 aufgerauht, wobei man sich zweckmäßigerweise eine Bearbeitungsverfahrens bedient, das eine hochgenaue und reproduzierbare Aufrauhung im µ-Bereich ermöglicht. Besonders bevorzugt ist der Einsatz der Elektroerosion, weil dieses Bearbeitungsverfahren die vorstehend genannten Forderungen erfüllt.

Selbstverständlich ist es auch möglich, zusätzlich die erste Oberfläche 17 des Maschinenbetts 15 entsprechend aufzurauhen, wobei die Paarung der Aufrauhungen so eingestellt wird, daß sich gegenüber der Auflage mit geschliffenen Oberflächen keine Lageveränderungen der Führungsschiene 13 ergeben.

Es ist hierzu möglich, die Oberflächen 18 und/oder 17 entweder über die gesamte Breite B der Führungsschiene 13 aufzurauhen oder nur einen kleineren Bereich b zu wählen, wie er durch den Druckkegel 20 bestimmt ist, der von der angezogenen Maschinenschraube 14 in der Ebene der Oberflächen 17, 18 erzeugt wird.

## Patentansprüche

1. Werkzeugmaschine mit zwei entlang einer Achse (16) relativ zueinander verfahrbaren Bewegungseinheiten, insbesondere einem Spindelstock (10) und einem Maschinenbett (15), mit einer an der ersten Bewegungseinheit lösbar befestigten Führungsschiene (13) zum Führen der verfahrbaren zweiten Bewegungseinheit, wobei die Führungsschiene (13) über eine erste Oberfläche (18) an einer zweiten Oberfläche (17) der ersten Bewegungseinheit anliegt und mit dieser verschraubt ist und die Oberflächen (17, 18) eben sowie feinbearbeitet sind, dadurch gekennzeichnet, daß mindestens eine der aneinanderliegenden Oberflächen (17, 18) mindestens in einem Bereich, der dem Druckkegel von eingeschraubten Maschinenschrauben entspricht, aufgerauht ist.

2. Werkzeugmaschine nach Anspruch 1, dadurch gekennzeichnet, daß die erste Oberfläche (18) der an ihren übrigen Oberflächen (19) geschliffenen Führungsschiene (13) aufgerauht ist.

3. Werkzeugmaschine nach Anspruch 1 oder 2, dadurch gekennzeichnet, daß die Oberfläche (17, 18) in einem Bereich (b) aufgerauht ist, der dem Druckkegel (20) von eingeschraubten Maschinenschrauben (14) entspricht.

4. Werkzeugmaschine nach einem der Ansprüche 1 bis 3, dadurch gekennzeichnet, daß die Oberfläche (17, 18) mittels Elektroerosion aufgerauht ist.

## Claims

1. A machine tool comprising two displacement units, in particular a spindle stock (10) and a machine bed (15), the displacement units being displaceable relative to each other along an axis (16), a guide rail (13) being attached to the first displacement unit for guiding the displaceable displacement unit, the guide rail (13) having a first surface (18) contacting a second surface (17) on the first displacement unit and being bolted to the latter, the surfaces (17, 18) being plane and finished, characterized in that at least one of the contacting surfaces (17, 18) is roughened at least in an area corresponding to the pressure cone of bolted machine screws.

2. The machine tool of claim 1, characterized in that the first surface (18) of the guide rail (13) is roughened, the remaining surfaces of the guide rail (13) being ground.

3. The machine tool of claim 1 or 2, characterized in that the surfaces (17, 18) are roughened to an area corresponding to the pressure cone (20) of bolted machine screws.

4. The machine tool of any of claims 1 - 3, characterized in that the surface (17, 18) is roughened by means of electro-erosion.

## Revendications

1. Machine-outil pourvue de deux unités de mouvement mobiles l'une par rapport à l'autre le long d'un axe (16), en particulier d'une poupée (10) et d'un banc de machine (15), pourvue d'un rail de guidage (13) fixé de façon amovible sur la première unité de mouvement et destiné à guider la deuxième unité de mouvement mobile, le rail de guidage (13) reposant, par une première surface (18), sur une deuxième surface (17) de la première unité de mouvement, et étant vissé à celle-ci et les surfaces (17, 18) étant usinées de façon plane et précise, caractérisée en ce qu'au moins l'une des surfaces adjacentes (17, 18) est rendue rugueuse au moins dans une zone correspondant au cône de pression de vis d'assemblage vissées.

2. Machine-outil selon la revendication 1, caractérisée en ce que la première surface (18) du rail de guidage (13), dont le reste des surfaces (19) est poli, est rugueuse.

3. Machine-outil selon la revendication 1 ou 2, caractérisée en ce que la surface (17, 18) est rugueuse dans une zone (b) qui correspond au cône de pression (20) de vis d'assemblage (14) vissées.

4. Machine-outil selon l'une des revendications 1 à 3, caractérisée en ce que la surface (17, 18) est rendue rugueuse par électro-érosion.
